# EUROPEAN PATENT SPECIFICATION

(11) **EP 2 302 815 B1**
(45) Date of publication and mention of the grant of the patent: **02.04.2014**
(21) Application number: 10172239.5
(22) Date of filing: 06.08.2010
(51) Int. Cl.: H04B 1/38

(54) **Helmet-attachable communication device**
Kommunikationsvorrichtung zur Befestigung an einem Helm
Dispositif de communication pouvant être attaché à un casque

(30) Priority: 25.09.2009 TW 98217729
(43) Date of publication of application: 30.03.2011
(73) Proprietor: Chia Soon Electronics Co., Ltd., Taipei 11484 (TW)
(72) Inventor: Kou, Mei-Ling, Songshan Dist., Taipei City 10573 (TW)
(74) Representative: Chaillot, Geneviève

(56) References cited:
- WO-A1-03/026257
- CN-Y- 201 163 786
- US-A1- 2005 113 150
- US-A1- 2005 181 826
- US-A1- 2007 167 189
- US-A1- 2009 186 665

## Description

### FIELD OF THE INVENTION

The present invention relates to a communication device attachable to an outer side of a helmet, and more particularly to a helmet-attachable communication device that is wirelessly connected to a mobile communication device and has an expansion slot to allow a user to expand the functions of the communication device as needed by inserting an expansion unit into the expansion slot, and therefore has enhanced functionality and practicality while ensuring the user's safety in riding.

### BACKGROUND OF THE INVENTION

Before the mobile phone is introduced into the market, people can only use wired phones to communicate with one another. However, the wired phones only allow people at fixed indoor locations to use them to communicate with one another, and could not be used to call someone outdoors. Now, with the quickly developed electronic technology, mobile phones are introduced into the market to bring a lot of conveniences to people. With the mobile phones, people can communicate with one another at any place that allows receiving and transmission of wireless signals.

While the mobile phones bring people a lot of conveniences, they also bring some problems. For example, a motorcycle rider talking over a mobile phone during riding has to release one hand from the motorcycle handgrip for holding the mobile phone. By doing so, the rider could not concentrate on riding and accident tends to occur.

To overcome the above problem, there is developed a hand-free mobile phone, which allows a user to talk over the mobile phone without the need of holding the mobile phone with one hand. Such a hand-free mobile phone generally includes a simple earphone and a microphone. When a user rides a motorcycle and is required to wear a helmet, the earphone for the hand-free mobile phone tends to separate from the user's ear when the user puts on the helmet and therefore causes inconvenience to the user. Further, the microphone for the hand-free mobile phone is usually located outside the helmet to result in poor communication quality.

There is also a type of communication device available in the market for improving the problem of easily separated earphone in the helmet. Such a communication device is different from the hand-free mobile phone, and is entirely fixed to an outer side of the helmet with a microphone and an earphone of the communication device extended into the helmet for use.

Patent application US 2009/0186665 discloses a helmet-type hands free system with a radio communication function.

While the above-described communication device solves the problem of easily separated earphone in the helmet, it only allows the user to talk with other users over the mobile phone without the need of holding the mobile phone with one hand. The communication device does not provide other additional functions, such as outputting digital music, providing global positioning system (GPS) based navigation, or receiving broadcast. For the consumers who demand for multifunctional electronic devices, a communication device with as many functions as possible would save the users' burden of carrying a lot of different devices at the same time and is therefore more convenient for use. Therefore, it is desirable to develop a communication device for motorcycle riders, so that the riders can talk with others or enjoy music or broadcast programs via the communication device while riding safely.

### SUMMARY OF THE INVENTION

A primary object of the present invention is to provide a helmet-attachable communication device, which is wirelessly connected to a mobile communication device and therefore allows a motorcycle rider wearing a helmet with the communication device attached thereto to talk over the mobile communication device while riding without the need of holding the mobile communication device with one hand. Therefore, the rider's safety in riding is ensured.

Another object of the present invention is to provide a helmet-attachable communication device that is provided with an expansion slot for receiving expansion devices of different functions, so that a user can add other special functions to the communication device via the expansion slot, giving the communication device enhanced functionality and practicality.

A further object of the present invention is to provide a helmet-attachable communication device having a control unit wirelessly connected thereto, and the control unit can be mounted on a motorcycle handgrip for a rider to conveniently set or switch the helmet-attachable communication device or answering a mobile communication device during riding by operating the control unit without the need of releasing one hand from the handgrip, so that the rider's safety in riding can be effectively ensured.

A still further object of the present invention is to provide a helmet-attachable communication device that includes two wirelessly connected communication unit and secondary communication device for wearing by a motorcycle rider and a passenger, respectively, so that the rider and the passenger wearing a helmet could still clearly hear each other while riding.

To achieve the above and other objects, the helmet-attachable communication device according to the present invention is designed for detachably mounting to an outer side of a helmet and wirelessly connecting to a mobile communication device, allowing a user riding a motorcycle to talk with others without the need of holding the mobile communication device with one hand. The helmet-attachable communication device includes a communication unit having a case externally provided with a plurality of keys and an expansion slot, and internally provided with a microprocessor, to which a Bluetooth module, a sound encoding/decoding module, a key module, a transmission module, and a power supply module are internally electrically connected; the Bluetooth module being wirelessly connected to the mobile communication device, the transmission module being electrically connected to the expansion slot, and the key module being coupled with the keys externally provided on the case; a fixing unit being externally provided on the communication unit for detachably mounting the communication unit to an outer lateral side of the helmet; a microphone/speaker unit being externally connected to the sound encoding/decoding module in the communication unit, and including a microphone and a speaker mounted in the helmet; the microphone receiving the user's voice, and the speaker outputting voice messages coming from the mobile communication device; and an expansion unit being inserted in the expansion slot on the case of the communication unit to electrically connect to the microprocessor via the transmission module.

The helmet-attachable communication device according to a first preferred embodiment of the present invention includes a communication unit, a fixing unit, a microphone/speaker unit, and an expansion unit.

The communication unit has a case consisting of a first and a second case pivotally turnably connected to each other via a connecting mechanism. The case is externally provided with a plurality of keys, and the second case is provided on an inner face facing toward the first case with an expansion slot. The communication unit is internally provided with a microprocessor, to which a Bluetooth module, a sound encoding/decoding module, a key module, a transmission module, and a power supply module are internally electrically connected. The Bluetooth module is wirelessly connected to the mobile communication device. The transmission module is electrically connected to the expansion slot, and the key module is coupled with the keys externally provided on the case. The fixing unit is externally provided on the communication unit for attaching the communication unit to an outer lateral side of the helmet. The microphone/speaker unit is externally connected to the sound encoding/decoding module in the communication unit, and includes a microphone and a speaker mounted in the helmet. The microphone receives the user's voice, and the speaker outputs voice messages from the mobile communication device. And, the expansion unit is inserted in the expansion slot on the case of the communication unit to electrically connect to the microprocessor via the transmission module.

A first type of the connecting mechanism includes a pivot section provided at an end of the first case, and a mating pivot section provided at a corresponding end of the second case for pivotally fitting in the pivot section, such that the first case is vertically pivotally turnable about the connecting mechanism relative to the second case between a closed and an opened position. A second type of the connecting mechanism includes two spaced elongated sliding grooves provided on the inner face of the second case near along two lateral edges thereof, and two sliding blocks correspondingly provided on an inner face of the first case near two lateral edges thereof. The sliding blocks are separately slidably held in the sliding grooves, allowing the first case to translate relative to the second case between a closed position and an opened position, and the first case at the opened position being horizontally dislocated from the second case. And, a third type of the connecting mechanism includes a pivot pin located between the inner face of the first and of the second case. The pivot pin has an end fixed to the second case and an opposing end connected to the first case, such that the first case can be horizontally pivotally rotated by 360 degrees about the pivot pin relative to the second case between a closed position and an opened position.

The expansion slot includes a recess configured corresponding to the expansion unit, a pivotal member set in the recess for holding the expansion unit thereto, and a pivot shaft located at and connected to an end of the recess and of the pivotal member. And, the transmission module is a universal serial bus (USB) interface.

In the present invention, the expansion unit externally has an end configured as a connector corresponding to the expansion slot and a display located on a top face thereof, and internally has an expansion module electrically connected to the connector and the display. The expansion module is a multifunctional module combining more than one of a GPS navigation module, a digital music player module, an FM broadcast module, and an AM broadcast module.

The helmet-attachable communication device according to a second preferred embodiment of the present invention includes a communication unit, a fixing unit, a microphone/speaker unit, and an expansion unit. The communication unit includes a case, which is externally provided on a top face with a plurality of keys and an expansion slot. The expansion slot defines a receiving space therein, and the receiving space is internally provided with a socket. The case is internally provided with a microprocessor, to which a Bluetooth module, a sound encoding/decoding module, a key module, a transmission module, and a power supply module are internally electrically connected. The Bluetooth module is wirelessly connected to the mobile communication device, the transmission module is electrically connected to the expansion slot, and the key module is coupled with the keys externally provided on the case. The fixing unit is externally provided on a bottom face of the communication unit for attaching the communication unit to an outer lateral side of the helmet. The microphone/speaker unit is externally connected to internal circuits of the communication unit, and includes a microphone for receiving voice from a user and a speaker for outputting voice messages from the mobile communication device. The microphone/speaker unit is mounted in the helmet. The expansion unit is removably inserted in the expansion slot of the communication unit; and includes a top cover configured corresponding to the size of the expansion slot, a display provided on a top of the top cover, an expansion module located below the top cover, and a plug provided on the expansion module for connecting to the socket in the expansion slot.

In both of the first and the second preferred embodiment of the present invention, the expansion module can be selectively designed as a mono-functional module with a GPS navigation module. However, the mono-functional module is only illustrated to enable convenient explanation of the present invention. That is, depending on the user's requirements, other modules of different functions, such as a digital music player module, an FM broadcast module, and an AM broadcast module, can be added to the expansion module, so that the expansion module forms two or more than two composite multifunctional modules; the communication unit is further internally provided with a radio communication module electrically connected to the microprocessor for receiving and transmitting within a short range radio signals having a preset frequency to thereby allow voice communication; and the fixing unit can be integrally formed with the communication unit or a fixing structure removably connected to the communication unit.

The helmet-attachable communication device according to a preferred embodiment of the present invention further includes a control unit wirelessly connected to the communication unit. The control unit includes a control panel having a plurality of keys provided thereon, the control panel is internally provided with a microprocessor, to which a Bluetooth module, a power supply module, and a key module are internally electrically connected. And, the Bluetooth module of the control unit is wirelessly connected to the Bluetooth module of the communication unit.

The control unit further includes a display externally provided on the control panel, and a display module internally provided in the control panel to electrically connect to the microprocessor of the control unit. The display on the control unit shows the use state of the communication unit.

In an operable embodiment, the control unit includes a fixing member connected to the control panel and configured for fixing to a motorcycle handgrip. In another operable embodiment, the control unit is integrally formed with a motorcycle handgrip with the control panel exposed from the handgrip.

The helmet-attachable communication device according to another preferred embodiment of the present invention further includes a secondary communication unit wirelessly connected to the communication unit. The secondary communication unit is internally provided with a microphone, a speaker, a microprocessor, a Bluetooth module, a power supply module, and a sound encoding/decoding module. The Bluetooth module, the power supply module, and the sound encoding/decoding module are electrically connected to the microprocessor; and the microphone and the speaker are electrically connected to the sound encoding/decoding module.

In an operable embodiment of the present invention, the helmet-attachable communication device including a communication unit and a secondary communication unit further includes a control unit wirelessly connected to the communication unit and the secondary communication unit. In this embodiment, the control unit includes a control panel having a plurality of keys provided thereon. The control panel is internally provided with a microprocessor, to which a Bluetooth module, a power supply module, and a key module are internally electrically connected. The Bluetooth module of the control unit is wirelessly connected to the Bluetooth modules of the communication unit and the secondary communication unit; and the key module is used to control the communication unit and the secondary communication unit.

The above-described control unit further includes a display externally provided on the control panel, and a display module internally provided in the control panel to electrically connect to the microprocessor of the control unit. And, the display shows the use state of the communication unit and the secondary communication unit.

The communication device of the present invention is characterized in a communication unit internally provided with a Bluetooth module wirelessly connectable to a mobile communication device. Through the Bluetooth wireless transmission, a motorcycle rider using the present invention is allowed to talk with others while riding without the need of holding the mobile communication device. Further, the communication unit is provided on a case thereof with an expansion slot, to which an expansion unit with a multifunctional module can be inserted to thereby electrically connect to the communication unit, allowing the communication device to have additional special functions and enhanced functionality and practicality.

The communication device of the present invention can also include a control unit mounted to a motorcycle handgrip and/or a secondary communication unit for mounting in a passenger's helmet. The control unit allows a rider to set or switch the communication unit or answering the mobile communication device without the need of releasing one hand from the handgrip, and therefore largely increases the rider's safety in riding while using the communication device. The communication unit and the secondary communication unit allow the rider and the passenger wearing a helmet to clearly hear each other while riding.

### BRIEF DESCRIPTION OF THE DRAWINGS

The structure and the technical means adopted by the present invention to achieve the above and other obj ects can be best understood by referring to the following detailed description of the preferred embodiments and the accompanying drawings, wherein
Fig. 1 shows a helmet-attachable communication device according to the present invention, which is wirelessly connectable to a mobile communication device;
Fig. 2 shows the helmet-attachable communication device of the present invention being attached to a helmet;
Fig. 3 is a perspective view showing the helmet-attachable communication device according to a first preferred embodiment of the present invention;
Fig. 4 shows the helmet-attachable communication device of the first preferred embodiment with a first type of case connecting mechanism;
Fig. 5 shows the helmet-attachable communication device of the first preferred embodiment with a second type of case connecting mechanism;
Fig. 6 shows the helmet-attachable communication device of the first preferred embodiment with a third type of case connecting mechanism;
Fig. 7 is an assembled perspective view showing the helmet-attachable communication device according to a second preferred embodiment of the present invention;
Fig. 8 is an exploded view of Fig. 8;
Fig. 9 is a block diagram showing the internal structure of the helmet-attachable communication device according to the present invention;
Fig. 10 shows the communication unit of the helmet-attachable communication device of the present invention with a separate control unit;
Fig. 11 is a block diagram showing the internal structure of the helmet-attachable communication device of Fig. 10;
Fig. 12 shows the communication unit of the helmet-attachable communication device of the present invention with a separate secondary communication unit;
Fig. 13 is a block diagram showing the internal structure of the helmet-attachable communication device of Fig. 12;
Fig. 14 shows the helmet-attachable communication device of the present invention with a secondary communication unit and a control unit;
Fig. 15 is a block diagram showing the internal structure of the helmet-attachable communication device of Fig. 14;
Fig. 16 shows two independent helmet-attachable communication devices of the present invention are communicable with one another via a radio communication module provided in each of the communication devices; and
Fig. 17 is a block diagram showing the internal structure of the helmet-attachable communication devices of Fig. 16.

### DETAILED DESCRIPTION OF THE PREFERRED EMBODIMENTS

The present invention will now be described with some preferred embodiments thereof. For the purpose of easy to understand, elements that are the same in the preferred embodiments are denoted by the same reference numerals.

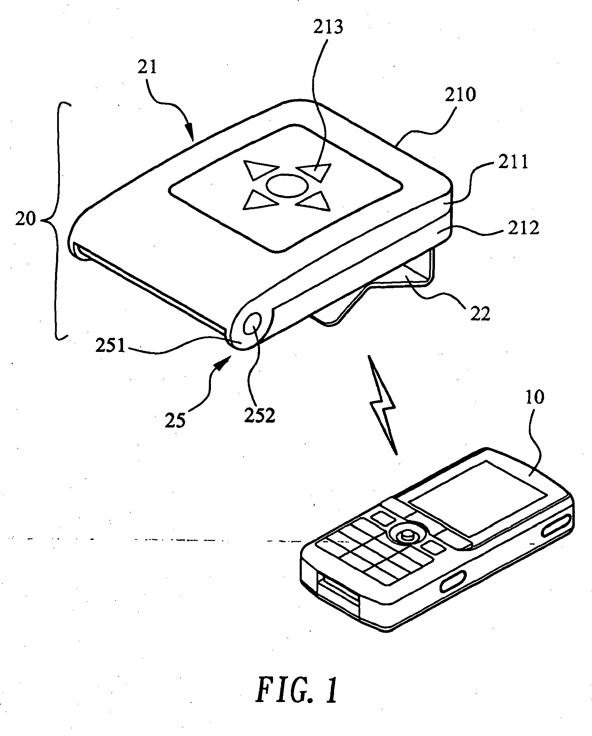

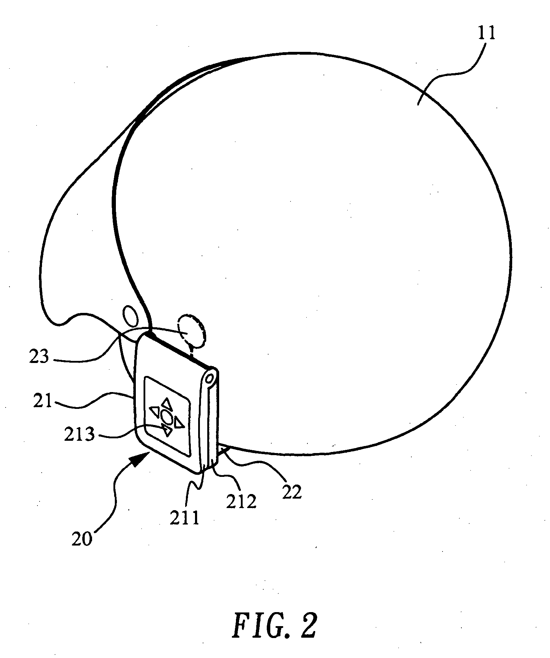

Please refer to Figs. 1 and 2. A helmet-attachable communication device 20 according to the present invention is wirelessly connectable to a mobile communication device 10, allowing a user to talk with others over the mobile communication device 10 via the communication device 20 without the need of holding the mobile communication device 10. The helmet-attachable communication device 20 is detachably mounted to an outer side of a helmet 11 for use. In a preferred embodiment of the present invention, the mobile communication 10 is a mobile phone providing a Bluetooth wireless transmission function.

The helmet-attachable communication device 20 according to the present invention includes a communication unit 21, a fixing unit 22, a microphone/speaker unit 23, and an expansion unit 24.

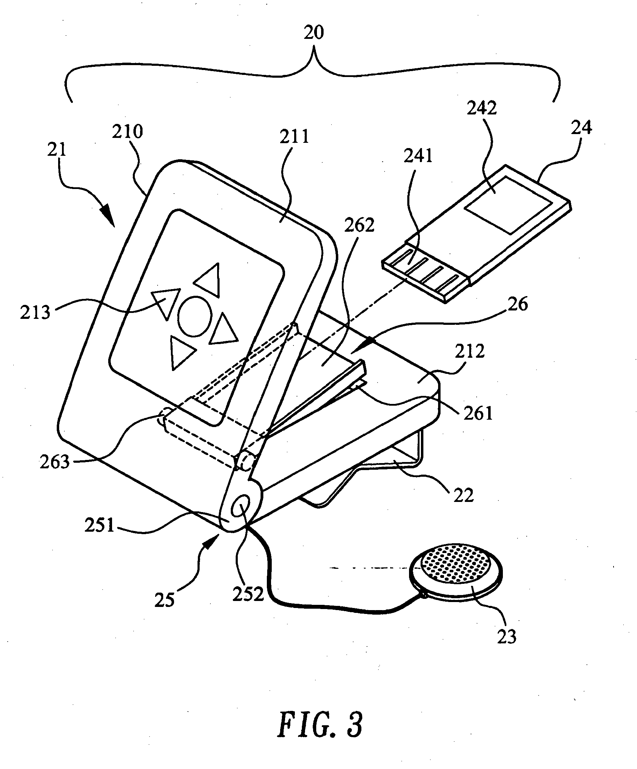

Please refer to Fig. 3. In a first preferred embodiment of the present invention, the communication unit 21 includes a case 210 consisting of a first case 211 and a second case 212. A connecting mechanism 25 is provided on the case 210 between the first case 211 and the second case 212, so that the first and second cases 211, 212 are movably connected to each other via the connecting mechanism 25. The case 210 is provided on an outer face of the first case 211 with a plurality of keys 213, and on an inner face of the second case 212 facing toward the first case 211 with an expansion slot 26. The fixing unit 22 is externally provided on the communication unit 21 for attaching the communication unit 21 to an outer lateral side of the helmet 11. The microphone/speaker unit 23 is externally connected to internal circuits of the communication unit 21, and includes a microphone 231 for receiving voice from a user and a speaker 232 for outputting voice messages coming from the mobile communication device 10. The microphone/speaker unit 23 is mounted in the helmet 11. The expansion unit 24 is removably inserted into the expansion slot 26 of the communication unit 21.

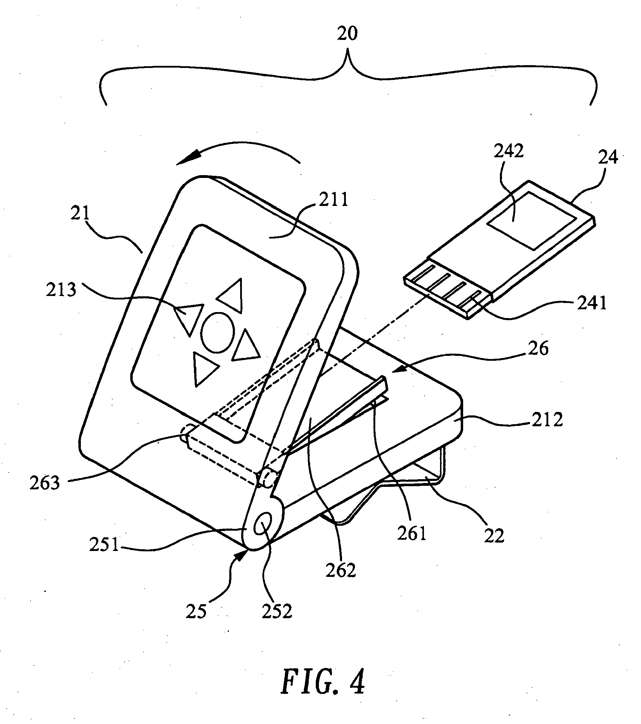

Please refer to Fig. 4, in a first type of the connecting mechanism 25, there are included a pivot section 251 provided at an end of the first case 211, and a mating pivot section 252 provided at a corresponding end of the second case 212 for pivotally fitting in the pivot section 251, such that the first case 211 can be vertically pivotally turned about the connecting mechanism 25 relative to the second case 212 between a closed and an opened position. When the first case 211 is turned to the opened position, the expansion slot 26 is exposed and accessible to a user.

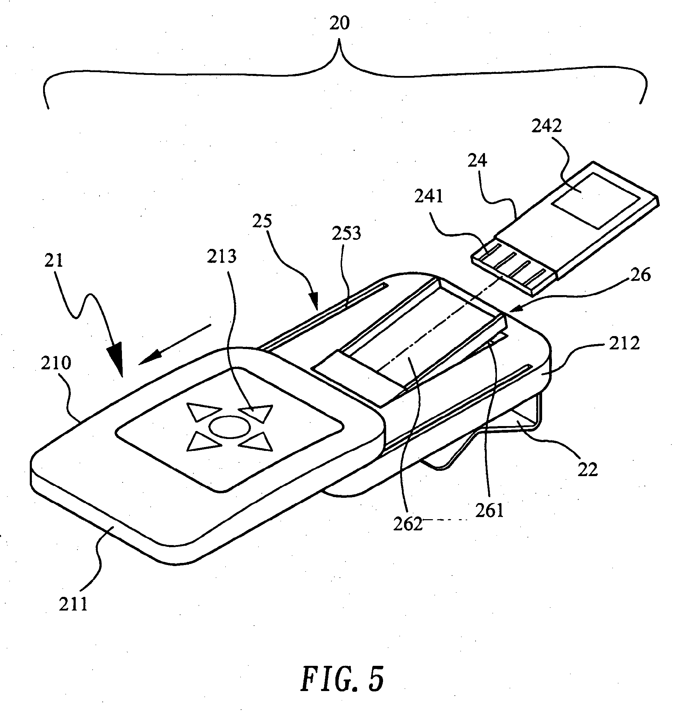

Please refer to Fig. 5, in a second type of the connecting mechanism 25, there are included two spaced elongated sliding grooves 253 provided on the inner face of the second case 212 near along two lateral edges thereof, and two sliding blocks (not shown) correspondingly provided on an inner face of the first case 211 near two lateral edges thereof. The sliding blocks are separately slidably held in the sliding grooves 253, allowing the first case 211 to translate relative to the second case 212 between a closed position and an opened position. The first case 211 at the opened position is horizontally dislocated from the second case 212 to expose the expansion slot 26.

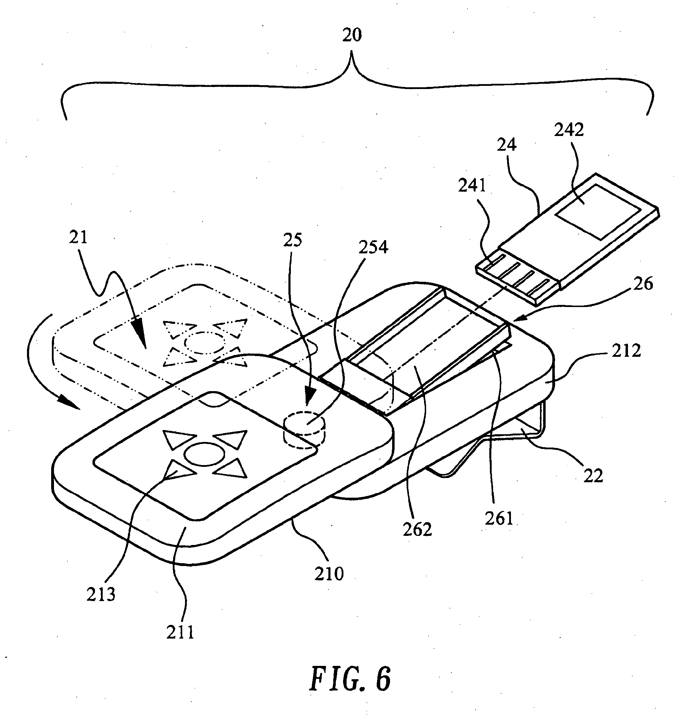

Please refer to Fig. 6, in a third type of the connecting mechanism 25, there is included a pivot pin 254 provided between the inner face of the first and of the second case 211, 212. The pivot pin 254 has an end fixed to the second case 212, and an opposing end connected to the first case 211, such that the first case 211 can be horizontally pivotally rotated by 360 degrees about the pivot pin 254 relative to the second case 212 between a closed position and an opened position. When the first case 211 is turned to the opened position, the expansion slot 26 is exposed and accessible to a user.

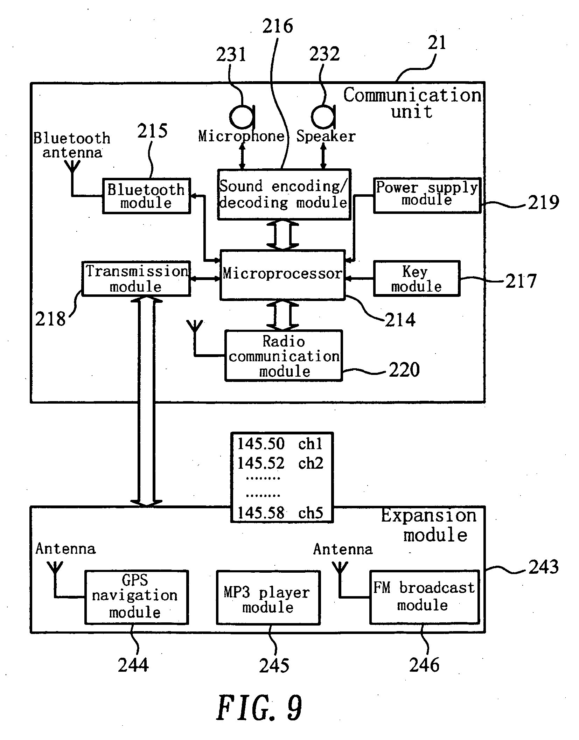

As can be seen in the first preferred embodiment of the present invention illustrated in Figs. 3 to 6, the expansion slot 26 includes a recess 261 configured corresponding to the expansion unit 24, a pivotal member 262 set in the recess 261 for holding the expansion unit 24 thereto, and a pivot shaft 263 (see Figs. 3 and 4) located at and connected to an end of the recess 261 and of the pivotal member 262, so that the pivotal member 262 is pivotally turnably connected to the recess 261. The expansion unit 24 has an end configured as a connector 241 corresponding to the expansion slot 26, a display 242 located on a top face thereof, and an expansion module 243 (see Fig. 9) electrically connected to the connector 241 and the display 242.

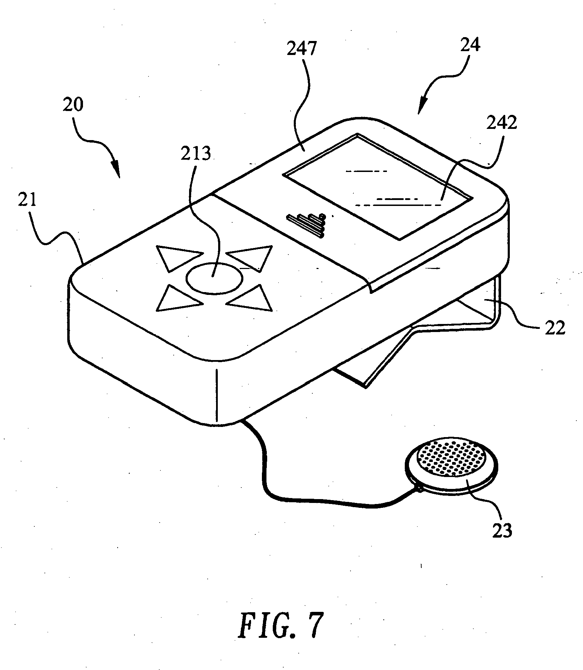

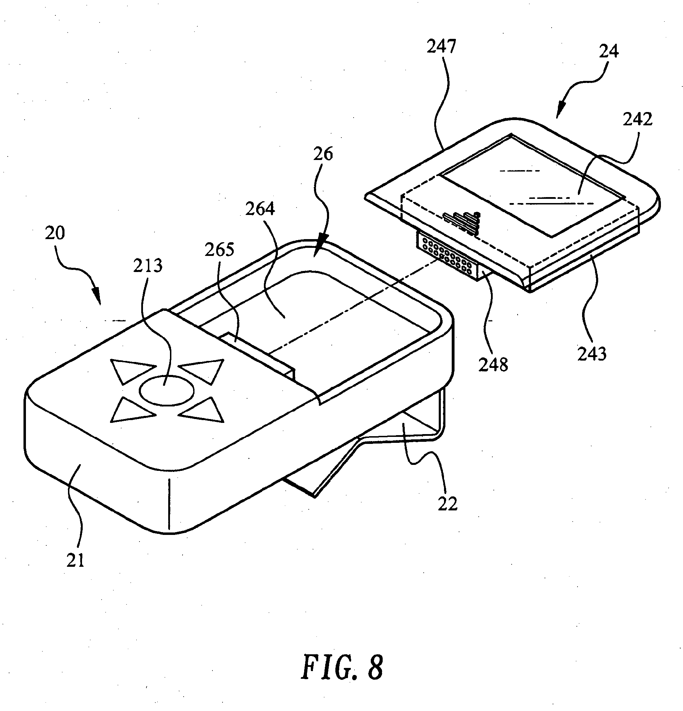

Please refer to Figs. 7 and 8, which are assembled and exploded perspective views, respectively, of a helmet-attachable communication device 20 according to a second preferred embodiment of the present invention. As shown, the helmet-attachable communication device 20 in the second preferred embodiment also includes a communication unit 21, a fixing unit 22, a microphone/speaker unit 23, and an expansion unit 24.

The communication unit 21 includes a case 210, which is externally provided on a top face with a plurality of keys 213 and an expansion slot 26. The expansion slot 26 defines a receiving space 264 therein, and the receiving space 264 is internally provided with a socket 265. The fixing unit 22 is externally provided on a bottom face of the communication unit 21 for attaching the communication unit 21 to an outer lateral side of the helmet 11. The microphone/speaker unit 23 is externally connected to internal circuits of the communication unit 21, and includes a microphone 231 for receiving voice from a user and a speaker 232 for outputting voice messages coming from the mobile communication device 10. The microphone/speaker unit 23 is mounted in the helmet 11. The expansion unit 24 is removably inserted into the expansion slot 26 of the communication unit 21 to connect to the socket 265.

The expansion unit 24 includes a top cover 247 configured corresponding to the size of the expansion slot 26, a display 242 provided on a top of the top cover 247, an expansion module 243 located below the top cover 247, and a plug 248 provided on the expansion module 243 for connecting to the socket 265 in the expansion slot 26. When the expansion unit 24 is fitted in the expansion slot 26 with the top cover 247 tightly contacting with inner wall surfaces of the expansion slot 26, the whole helmet-attachable communication device 20 is waterproof, and the plug 248 is plugged in the socket 265 for the communication unit 21 to electrically connect to the expansion unit 24 to have additional expanded functions via the expansion unit 24.

Please refer to Fig. 9 that is a block diagram showing the internal structure of the above-described two preferred embodiments of the present invention. As shown, the communication unit 21 includes a microprocessor 214, to which a Bluetooth module 215, a sound encoding/decoding module 216, a key module 217, a transmission module 218, a power supply module 219, and a radio communication module 220 are internally electrically connected. The Bluetooth module 215 is wirelessly connected to a Bluetooth transmission module on the mobile communication device 10; the sound encoding/decoding module 216 is connected to the microphone 231 and the speaker 232 in the microphone/speaker unit 23 for encoding and transmitting a sound signal and decoding and outputting the sound signal; the key module 217 is connected to the keys 213; the transmission module 218 can be a universal serial bus (USB) interface electrically connecting the expansion module 243 to the microprocessor 214 for the communication unit 21 to have additional special functions; the power supply module 219 can be a built-in battery charging module; and the radio communication module 220 receives and transmits within a short range radio signals with preset frequency to allow users of independent communication devices 20 to talk with one another via the radio communication module 220.

According to the illustrated two preferred embodiments, the expansion module 243 in the expansion unit 24 includes a global positioning system (GPS) based navigation module 244, a digital music player (MP3) module 245, and a frequency modulation (FM) broadcast module 246. The GPS navigation module 244 provides voice navigation; the digital music player module 245 is able to directly transmit internally stored digital music to the communication unit 21 for playing; and the FM broadcast module 246 can carry on frequency modulation through operation of the keys 213 and the key module 217 of the communication unit 21. In another operable embodiment, the expansion module 243 further includes an amplitude modulation (AM) broadcast module (not shown).

While the above illustrated preferred embodiments have an expansion module 243 with three different functional modules, it is understood these embodiments are illustrated only as examples to facilitate convenient description of the present invention and not intended to restrict the present invention. That is, the expansion module 243 can otherwise have only one of the three functional modules, combine any two of them, or have other additional functional modules. The expansion module 243 can include one or more different expanded functional modules depending on the user's need to satisfy different requirements.

In the above illustrated preferred embodiments, the fixing unit 22 is integrally formed with the communication unit 21. However, it is understood the present invention is not necessarily restricted to having an integrally formed fixing unit 22. The fixing unit 22 can be otherwise a removable fixing structure (not shown) allowing the user to remove it from the communication device 20 and store it separately when the communication device 20 is not used by the user during riding a motorcycle, for example. Thus, the communication device 20 of the present invention can also be conveniently and practically used as a multifunctional multimedia player.

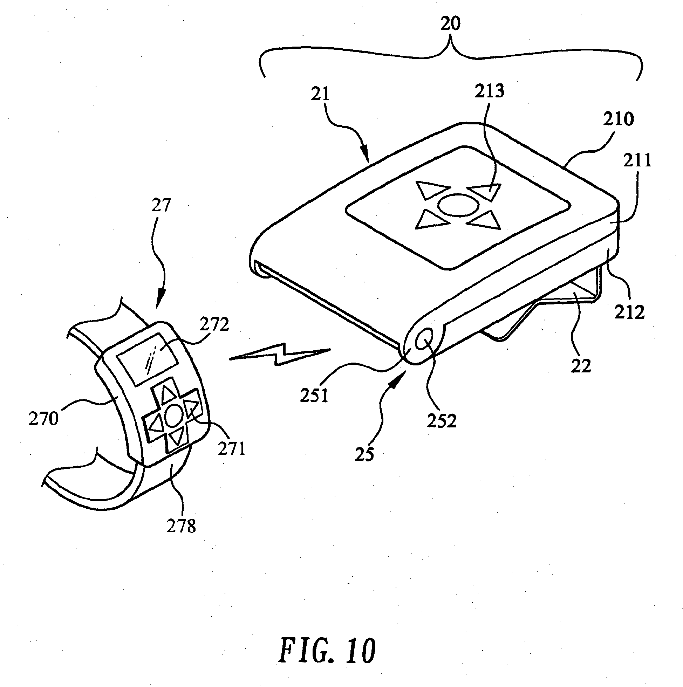

Please refer to Fig. 10. The communication device 20 of the present invention can further include a control unit 27 wirelessly connected to the communication unit 21 to cooperatively work with the latter. The control unit 27 is mounted on a handgrip of a motorcycle, allowing the user to conveniently operate the control unit 27 to set or switch the communication unit 21 or answer the mobile communication device 10 while riding without the need of releasing one hand from the handgrip.

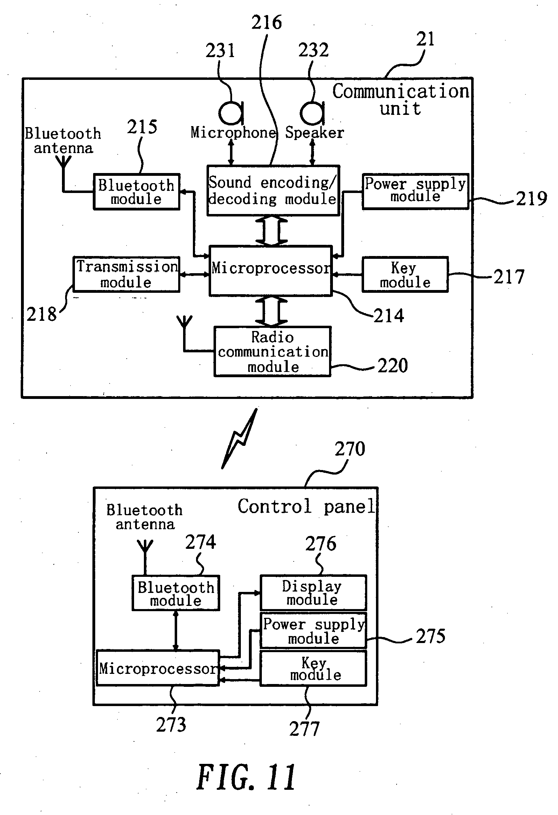

Please also refer to Fig. 11. The control unit 27 includes a control panel 270, which is externally provided with a plurality of keys 271 and a display 272, and internally provided with a microprocessor 273, to which a Bluetooth module 274, a power supply module 275, a display module 276, and a key module 277 are internally electrically connected.

The Bluetooth module 274 for the control unit 27 is wirelessly connected to the Bluetooth module 215 of the communication unit 21; the key module 277 controls the setting and switching of the communication unit 21 and the answering of the mobile communication device 10 via user operation on the keys 271; the display module 276 shows on the display 272 the use state of the communication unit 21; and the power supply module 275 is a built-in battery charging module.

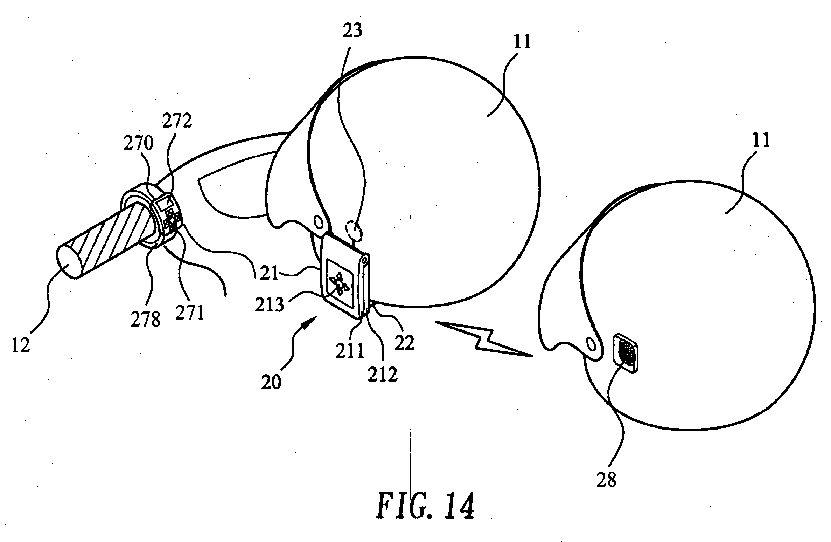

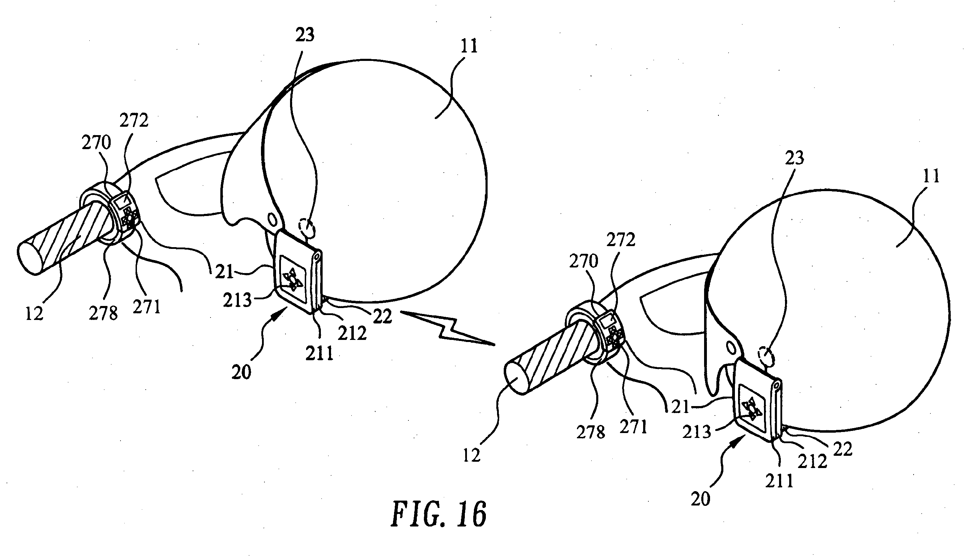

As can be seen from Fig. 10, according to an operable embodiment of the present invention, the control unit 27 includes a fixing member 278 connected to the control panel 270 and configured for fixing to a motorcycle handgrip 12 (see Figs. 14 and 16). In another operable embodiment, the control unit 27 is integrally formed in the motorcycle handgrip 12 with the control panel 270 exposed from an outer side of the handgrip 12 (not shown).

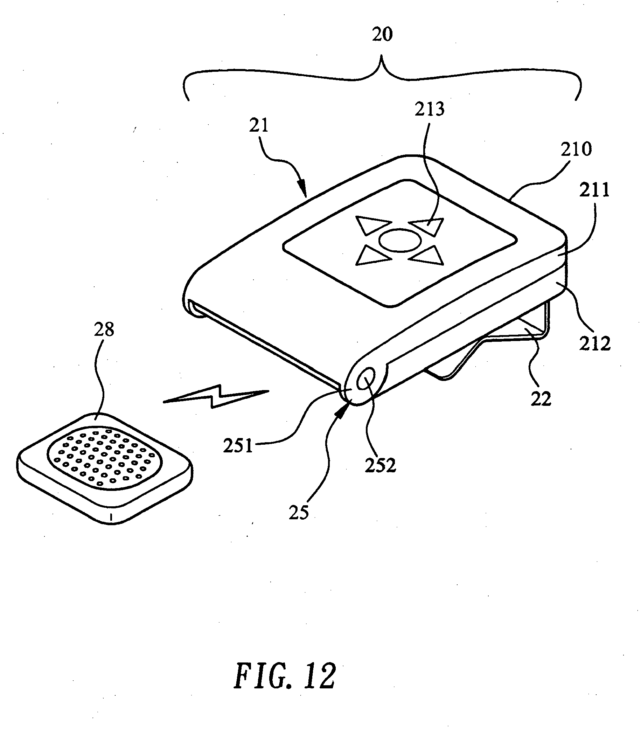

Please refer to Fig. 12. In the present invention, the communication device 20 can further include a secondary communication unit 28 wireless connected to the communication unit 21. The secondary communication unit 28 can be properly mounted on a passenger of the same motorcycle, allowing the rider and the passenger to talk with each other via the communication unit 21 and the secondary communication unit 28 while riding the motorcycle.

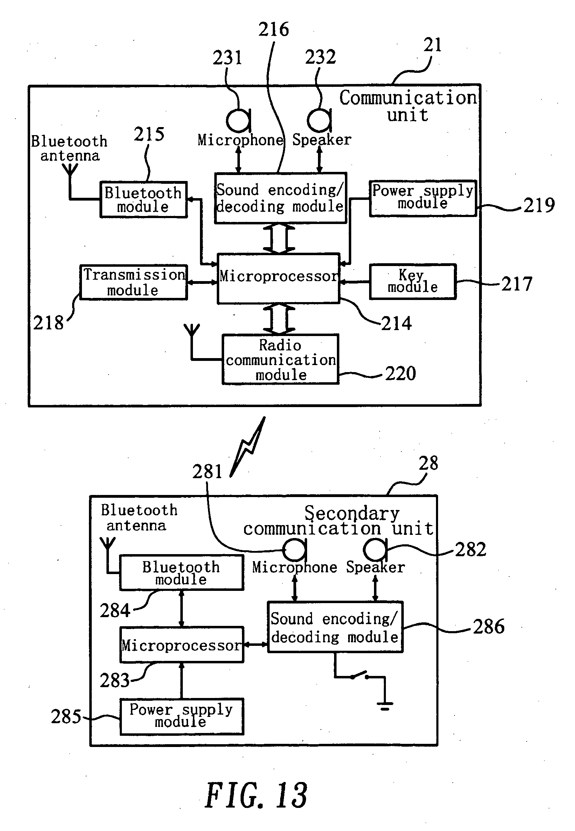

Please refer to Fig. 13. The secondary communication unit 28 internally includes a microphone 281, a speaker 282, a microprocessor 283, a Bluetooth module 284, a power supply module 285, and a sound encoding/decoding module 286. The Bluetooth module 284, the power supply module 285, and the sound encoding/decoding module 286 are internally electrically connected to the microprocessor 283; and the microphone 281 and the speaker 282 are electrically connected to the sound encoding/decoding module 286. The Bluetooth module 284 in the secondary communication unit 28 is wirelessly connected to the Bluetooth module 215 in the communication unit 21. The power supply module 285 is a built-in battery charging module. The sound encoding/decoding module 286 is able to encode and transmit sound signals and decode and output the sound signals.

Through the transmission via the Bluetooth module 284, the passenger can talk with the rider via the communication unit 21 on the rider's helmet 11. Therefore, the rider and the passenger can still clearly hear each other even if they wear a helmet 11 each.

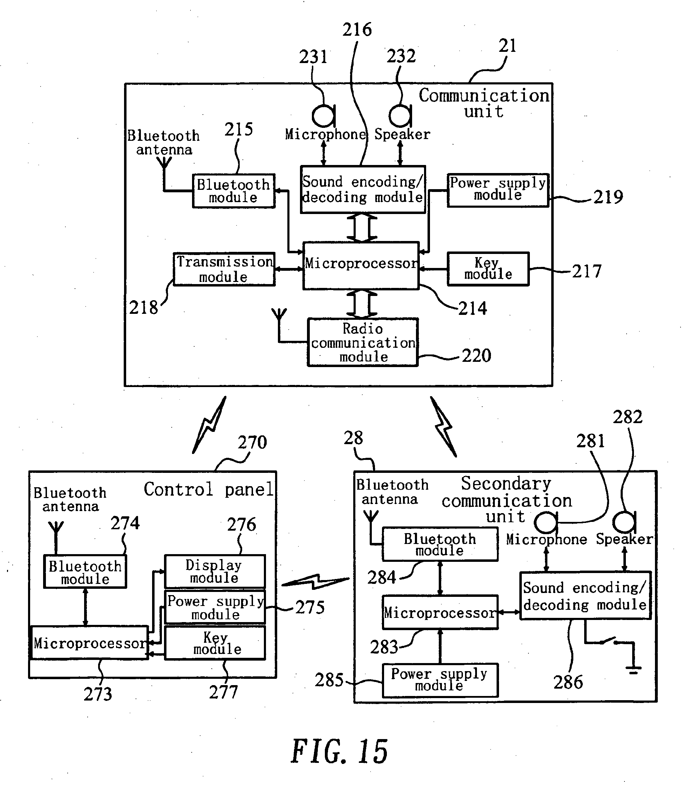

Please refer to Figs. 14 and 15 at the same time. The secondary communication unit 28 and the control unit 27 can be wirelessly connected to the communication unit 21 for use at the same time. In the illustrated preferred embodiment, the secondary communication unit 28 is directly mounted in the passenger's helmet 11 for use.

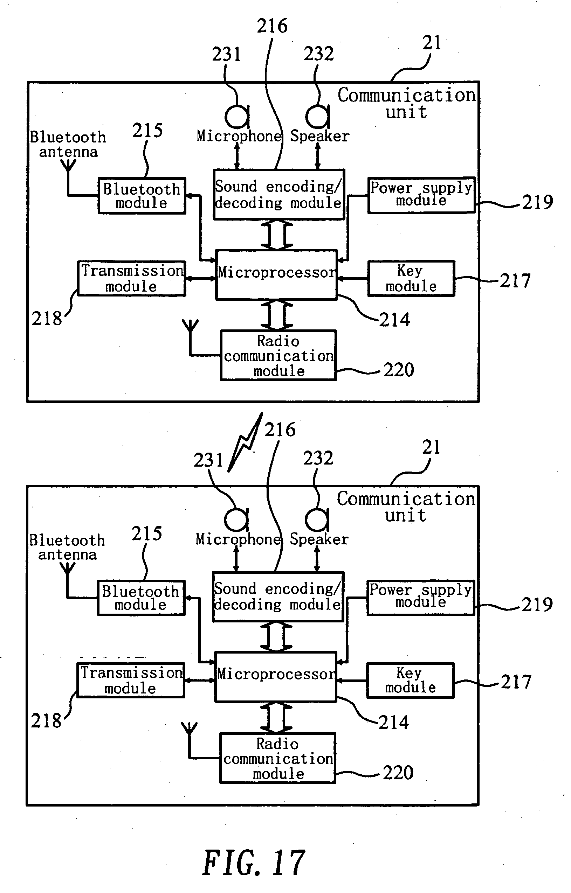

Please refer to Figs. 16 and 17 at the same time. The radio communication module 220 in the communication unit 21 of the helmet-attachable communication device 20 of the present invention enables short-range radio transmission and receiving. Therefore, by setting their respective radio communication module 220 to a predetermined frequency, a group of riders using the communication devices 20 of the present invention can directly contact with one another while riding without the need of dialing the mobile communication device 10. Thus, the helmet-attachable communication device 20 of the present invention can provide upgraded functionality and practicality.

In brief, the communication device of the present invention is characterized in a communication unit internally provided with a Bluetooth module wirelessly connectable to a mobile communication device. Through the Bluetooth wireless transmission, a rider using the present invention is allowed to talk with others while riding without the need of holding the mobile communication device. Further, the communication unit is provided on a case thereof with an expansion slot, into which an expansion unit with a multifunctional module can be inserted to thereby electrically connect to the communication unit, allowing the communication device to have additional special functions. The communication unit can also be internally provided with a radio communication module, allowing a plurality of the communication devices of the present invention to perform short-range radio communication with one another.

The communication device of the present invention can also include a control unit mounted to a motorcycle handgrip and/or a secondary communication unit for mounting in a passenger's helmet. The control unit allows a rider to control the communication unit without the need of releasing one hand from the handgrip, and therefore largely increases the rider's safety in riding while using the communication device. The communication unit and the secondary communication unit allow the rider and the passenger wearing a helmet to clearly hear each other while riding motorcycle.

The present invention has been described with some preferred embodiments thereof and it is understood that many changes and modifications in the described embodiments can be carried out without departing from the scope and the spirit of the invention that is intended to be limited only by the appended claims.

## Claims

1. A helmet-attachable communication device(20) for detachably mounting to an outer side of a helmet(11) and wirelessly connecting to a mobile communication device(10) to allow a user to talk with others while riding motorcycle without the need of holding the mobile communication device(10), comprising:
a communication unit(21) having a case(210) externally provided with a plurality of keys(213) and an expansion slot(26), and internally provided with a microprocessor(214), to which a Bluetooth module(215), a sound encoding/decoding module(216), a key module(217), a transmission module(218), and a power supply module(219) are internally electrically connected; the Bluetooth module(215) being wirelessly connected to the mobile communication device(10), the transmission module(218) being electrically connected to the expansion slot(26), and the key module(217) being coupled with the keys(213) externally provided on the case(210);
a fixing unit(22) being externally provided on the communication unit(21) for detachably mounting the communication unit(21) to an outer lateral side of the helmet(11);
a microphone/speaker unit(23) being externally connected to the sound encoding/decoding module(216) in the communication unit(21), and including a microphone(231) and a speaker(232) mounted in the helmet(11); the microphone(231) receiving the user's voice, and the speaker(232) outputting voice messages coming from the mobile communication device(10); and
an expansion unit(24) being inserted in the expansion slot(26) on the case(210) of the communication unit(21) to electrically connect to the microprocessor(214) via the transmission module(218).

2. The helmet-attachable communication device as claimed in claim 1, wherein the case(210) includes a first case(211) and a corresponding second case(212), and a connecting mechanism(25) provided between the first(211) and the second case(212); and the expansion slot(26) being provided on an inner face of the second case(212) facing toward the first case(211).

3. The helmet-attachable communication device as claimed in claim 2, wherein the connecting mechanism(25) includes a pivot section(251) provided at an end of the first case(211), and a mating pivot section(252) provided at a corresponding end of the second case(212) for pivotally fitting in the pivot section(251), such that the first case(211) is vertically pivotally turnable about the connecting mechanism(25) relative to the second case(212) between a closed and an opened position.

4. The helmet-attachable communication device as claimed in claim 2, wherein the connecting mechanism(25) includes two spaced elongated sliding grooves(253) provided on the inner face of the second case(212) near along two lateral edges thereof, and two sliding blocks correspondingly provided on an inner face of the first case(211) near two lateral edges thereof; the sliding blocks being separately slidably held in the sliding grooves(253), allowing the first case(211) to translate relative to the second case(212) between a closed position and an opened position, and the first case(211) at the opened position being horizontally dislocated from the second case(212).

5. The helmet-attachable communication device as claimed in claim 2, wherein the expansion slot(26) includes a recess(261) configured corresponding to the expansion unit(24), a pivotal member(262) set in the recess(261) for holding the expansion unit(24) thereto, and a pivot shaft(263) located at and connected to an end of the recess(261) and of the pivotal member(262); and wherein the expansion unit(24) externally has an end configured as a connector(241) corresponding to the expansion slot(26) and a display(242) located on a top face thereof, and internally has an expansion module(243) electrically connected to the connector(241) and the display(242).

6. The helmet-attachable communication device as claimed in claim 5, wherein the expansion module(243) is a multifunctional module combining more than one of a GPS navigation module(244), a digital music player module(245), an FM broadcast module(246), and an AM broadcast module.

7. The helmet-attachable communication device as claimed in claim 1, wherein the expansion slot(26) defines a receiving space(264) therein, and the receiving space(264) being internally provided with a socket(265); and wherein the expansion unit(24) includes a top cover(247) configured corresponding to the size of the expansion slot(26), a display(242) provided on a top of the top cover(247), an expansion module(243) located below the top cover(247), and a plug(248) provided on the expansion module(243) for connecting to the socket(265) in the expansion slot(26).

8. The helmet-attachable communication device as claimed in claim 7, wherein the expansion module(243) is a multifunctional module combining more than one of a GPS navigation module(244), a digital music player module(245), an FM broadcast module(246), and an AM broadcast module.

9. The helmet-attachable communication device as claimed in claim 1, wherein the communication unit(21) is further internally provided with a radio communication module(220) electrically connected to the microprocessor(214) for receiving and transmitting within a short range radio signals having a preset frequency to thereby allow voice communication among different communication devices(20).

10. The helmet-attachable communication device as claimed in claim 1, further comprising a control unit(27) wirelessly connected to the communication unit(21); the control unit(27) including a control panel(270) having a plurality of keys(271) provided thereon, the control panel(270) being internally provided with a microprocessor(273), to which a Bluetooth module(274), a power supply module(275), and a key module(277) are internally electrically connected; and the Bluetooth module(274) of the control unit(27) being wirelessly connected to the Bluetooth module(215) of the communication unit(21).

11. The helmet-attachable communication device as claimed in claim 10, wherein the control unit(27) further includes a display(272) externally provided on the control panel(270), and a display module(276) internally provided in the control panel(270) to electrically connect to the microprocessor(273) of the control unit(27); and the display(272) showing a use state of the communication unit(21).

12. The helmet-attachable communication device as claimed in claim 11, wherein the control unit(27) is integrally formed with a motorcycle handgrip(12) with the control panel(270) exposed from the handgrip(12).

13. The helmet-attachable communication device as claimed in claim 1, further comprising a secondary communication unit(28) wirelessly connected to the communication unit(21); the secondary communication unit(28) being internally provided with a microphone(281), a speaker(282), a microprocessor(283), a Bluetooth module(284), a power supply module(285), and a sound encoding/decoding module(286); the Bluetooth module(284), the power supply module(285), and the sound encoding/decoding module(286) being electrically connected to the microprocessor(283), and the microphone(281) and the speaker(282) being electrically connected to the sound encoding/decoding module(286).

14. The helmet-attachable communication device as claimed in claim 13, further comprising a control unit(27) wirelessly connected to the communication unit(21) and the secondary communication unit(28); the control unit(27) including a control panel(270) having a plurality of keys(271) provided thereon, the control panel(270) being internally provided with a microprocessor(273), to which a Bluetooth module(274), a power supply module(275), and a key module(276) are internally electrically connected; the Bluetooth module(274) of the control unit(27) being wirelessly connected to the Bluetooth modules(215), (284) of the communication unit(21) and the secondary communication unit(28); and the key module(276) being used to control the communication unit(21) and the secondary communication unit(28).

15. The helmet-attachable communication device as claimed in claim 14, wherein the control unit(27) further includes a display(272) externally provided on the control panel(270), and a display module(276) internally provided in the control panel(270) to electrically connect to the microprocessor(273) of the control unit(27); and the display(272) showing a use state of the communication unit(21) and the secondary communication unit(28).

## Patentansprüche

1. Kommunikationsvorrichtung (20) zur Befestigung an einem Helm zum abnehmbaren Anbringen an einer Außenseite eines Helms (11) und drahtlosen Verbinden mit einer Mobilkommunikationseinrichtung (10), um einem Nutzer zu ermöglichen, während der Fahrt mit einem Motorrad mit anderen zu sprechen, ohne die Mobilkommunikationseinrichtung (10) halten zu müssen, umfassend:
eine Kommunikationseinheit (21) mit einem Gehäuse (210), das außen mit einer Vielzahl von Tasten (213) und einem Erweiterungsplatz (26) versehen ist und innen mit einem Mikroprozessor (214) versehen ist, mit dem innen ein Bluetooth-Modul (215), ein Ton-Codier-/-Decodier-Modul (216), ein Tastenmodul (217), ein Übertragungsmodul (218) sowie ein Stromversorgungsmodul (219) elektrisch verbunden sind; wobei das Bluetooth-Modul (215) drahtlos mit der Mobilkommunikationseinrichtung (10) verbunden ist, das Übertragungsmodul (218) elektrisch mit dem Erweiterungsplatz (26) verbunden ist und das Tastenmodul (217) mit den Tasten (213),
die außen am Gehäuse (210) angeordnet sind, gekoppelt ist;
eine Befestigungseinheit (22), die außen an der Kommunikationseinheit (21) angeordnet ist, um die Kommunikationseinheit (21) an einer seitlichen Außenseite des Helms (11) abnehmbar anzubringen;
eine Mikrofon-/Lautsprechereinheit (23), die außen mit dem Ton-Codier-/-Decodier-Modul (216) in der Kommunikationseinheit (21) verbunden ist und ein Mikrofon (231) und einen Lautsprecher (232) aufweist, die in dem Helm (11) befestigt sind; wobei das Mikrofon (231) die Stimme des Nutzers aufnimmt und der Lautsprecher (232) Sprachmitteilungen, die von der Mobilkommunikationseinrichtung (10) kommen, ausgibt; und
eine Erweiterungseinheit (24), die in den Erweiterungsplatz (26) an dem Gehäuse (210) der Kommunikationseinheit (21) gesteckt ist, um über das Übertragungsmodul (218) elektrisch an den Mikroprozessor (214) angeschlossen zu sein.

2. Kommunikationsvorrichtung zur Befestigung an einem Helm nach Anspruch 1, wobei das Gehäuse (210) ein erstes Gehäuse (211) und ein entsprechendes zweites Gehäuse (212) und einen Verbindungsmechanismus (25) aufweist, der zwischen dem ersten (211) und dem zweiten Gehäuse (212) angeordnet ist; und wobei der Erweiterungsplatz (26) an einer Innenfläche des zweiten Gehäuses (212) angeordnet ist, die in Richtung des ersten Gehäuses (211) zeigt.

3. Kommunikationsvorrichtung zur Befestigung an einem Helm nach Anspruch 2, wobei der Verbindungsmechanismus (25) einen Schwenkabschnitt (251) aufweist, der an einem Ende des ersten Gehäuses (211) angeordnet ist, und einen passenden Schwenkabschnitt (252), der an einem entsprechenden Ende des zweiten Gehäuses (212) angeordnet ist, um drehgelenkig in den Schwenkabschnitt (251) zu passen, sodass das erste Gehäuse (211) um den Verbindungsmechanismus (25) herum bezogen auf das zweite Gehäuse (212) zwischen einer geschlossenen und einer offenen Stellung senkrecht schwenkend drehbar ist.

4. Kommunikationsvorrichtung zur Befestigung an einem Helm nach Anspruch 2, wobei der Verbindungsmechanismus (25) zwei beabstandete längliche Gleitnuten (253) aufweist, die an der Innenfläche des zweiten Gehäuses (212) nahe entlang von zwei Seitenrändern davon angeordnet sind, und zwei Gleitstücke, die entsprechend an einer Innenfläche des ersten Gehäuses (211) nahe zwei Seitenrändern davon angeordnet sind; wobei die Gleitstücke separat verschiebbar in den Gleitnuten (253) gehalten sind, wodurch ermöglicht wird, dass sich das erste Gehäuse (211) bezogen auf das zweite Gehäuse (212) zwischen einer geschlossenen Stellung und einer offenen Stellung translatorisch bewegt, und das erste Gehäuse (211) in der offenen Stellung waagerecht versetzt zum zweiten Gehäuse (212) ist.

5. Kommunikationsvorrichtung zur Befestigung an einem Helm nach Anspruch 2, wobei der Erweiterungsplatz (26) eine Vertiefung (261) aufweist, die entsprechend der Erweiterungseinheit (24) eingerichtet ist, ein Schwenkelement (262), das in der Vertiefung (261) sitzt, um die Erweiterungseinheit (24) daran festzuhalten, und eine Drehachse (263), die sich an einem Ende der Vertiefung (261) und des Schwenkelements (262) befindet und damit verbunden ist; und wobei die Erweiterungseinheit (24) außen ein als ein Anschlussteil (241) eingerichtetes Ende, das dem Erweiterungsplatz (26) entspricht, und eine sich an einer Oberseite davon befindliche Anzeige (242) aufweist, und innen ein Erweiterungsmodul (243) aufweist, das elektrisch mit dem Anschlussteil (241) und der Anzeige (242) verbunden ist.

6. Kommunikationsvorrichtung zur Befestigung an einem Helm nach Anspruch 5, wobei es sich bei dem Erweiterungsmodul (243) um ein Multifunktionsmodul handelt, das mehr als eins von einem GPS-Navigationsmodul (244), einem digitalen Musikabspielmodul (245), einem UKW-Rundfunkmodul (246) und einem Mittelwellenrundfunk-Modul vereint.

7. Kommunikationsvorrichtung zur Befestigung an einem Helm nach Anspruch 1, wobei der Erweiterungsplatz (26) einen Aufnahmeraum (264) darin definiert, und der Aufnahmeraum (264) innen mit einer Buchse (265) versehen ist; und wobei die Erweiterungseinheit (24) eine obere Abdeckung (247) aufweist, die entsprechend der Größe des Erweiterungsplatzes (26) eingerichtet ist, eine Anzeige (242), die oben auf der oberen Abdeckung (247) angeordnet ist, ein Erweiterungsmodul (243), das sich unter der oberen Abdeckung (247) befindet, und einen Stecker (248), der an dem Erweiterungsmodul (243) für den Anschluss an die Buchse (265) im Erweiterungsplatz (26) angeordnet ist.

8. Kommunikationsvorrichtung zur Befestigung an einem Helm nach Anspruch 7, wobei es sich bei dem Erweiterungsmodul (243) um ein Multifunktionsmodul handelt, das mehr als eins von einem GPS-Navigationsmodul (244), einem digitalen Musikabspielmodul (245), einem UKW-Rundfunkmodul (246) und einem Mittelwellenrundfunk-Modul vereint.

9. Kommunikationsvorrichtung zur Befestigung an einem Helm nach Anspruch 1, wobei die Kommunikationseinheit (21) ferner innen mit einem Funkübertragungsmodul (220) versehen ist, das elektrisch mit dem Mikroprozessor (214) verbunden ist, um im Nahbereich Funksignale zu empfangen und zu senden, die eine voreingestellte Frequenz aufweisen, um dadurch die Sprachkommunikation zwischen verschiedenen Kommunikationsvorrichtungen (20) zu ermöglichen.

10. Kommunikationsvorrichtung zur Befestigung an einem Helm nach Anspruch 1, ferner umfassend eine Steuereinheit (27), die drahtlos mit der Kommunikationseinheit (21) verbunden ist; wobei die Steuereinheit (27) ein Bedienfeld (270) mit einer Vielzahl von darauf angeordneten Tasten (271) aufweist, wobei das Bedienfeld (270) innen mit einem Mikroprozessor (273) versehen ist, mit dem ein Bluetooth-Modul (274), ein Stromversorgungsmodul (275) und ein Tastenmodul (277) innen elektrisch verbunden sind; und wobei das Bluetooth-Modul (274) der Steuereinheit (27) drahtlos mit dem Bluetooth-Modul (215) der Kommunikationseinheit (21) verbunden ist.

11. Kommunikationsvorrichtung zur Befestigung an einem Helm nach Anspruch 10, wobei die Steuereinheit (27) ferner eine Anzeige (272) aufweist, die außen an dem Bedienfeld (270) angeordnet ist, und ein Anzeigemodul (276), das innen in dem Bedienfeld (270) angeordnet ist, um an den Mikroprozessor (273) der Steuereinheit (27) elektrisch angeschlossen zu sein; und wobei die Anzeige (272) einen Nutzungszustand der Kommunikationseinheit (21) anzeigt.

12. Kommunikationsvorrichtung zur Befestigung an einem Helm nach Anspruch 11, wobei die Steuereinheit (27) einteilig mit einem Motorradgriff (12) geformt ist, wobei das Bedienfeld (270) an dem Griff (12) freiliegt.

13. Kommunikationsvorrichtung zur Befestigung an einem Helm nach Anspruch 1, ferner umfassend eine zweite Kommunikationseinheit (28), die drahtlos mit der Kommunikationseinheit (21) verbunden ist; wobei die zweite Kommunikationseinheit (28) innen mit einem Mikrofon (281), einem Lautsprecher (282), einem Mikroprozessor (283), einem Bluetooth-Modul (284), einem Stromversorgungsmodul (285) sowie einem Ton-Codier-/-Decodier-Modul (286) versehen ist; wobei das Bluetooth-Modul (284), das Stromversorgungsmodul (285) und das Ton-Codier-/-Decodier-Modul (286) elektrisch mit dem Mikroprozessor (283) verbunden sind, und das Mikrofon (281) und der Lautsprecher (282) elektrisch mit dem Ton-Codier-/-Decodier-Modul (286) verbunden sind.

14. Kommunikationsvorrichtung zur Befestigung an einem Helm nach Anspruch 13, ferner umfassend eine Steuereinheit (27), die drahtlos mit der Kommunikationseinheit (21) und der zweiten Kommunikationseinheit (28) verbunden ist; wobei die Steuereinheit (27) ein Bedienfeld (270) mit einer Vielzahl von darauf angeordneten Tasten (271) aufweist, wobei das Bedienfeld (270) innen mit einem Mikroprozessor (273) versehen ist, mit dem ein Bluetooth-Modul (274), ein Stromversorgungsmodul (275) und ein Tastenmodul (276) innen elektrisch verbunden sind; wobei das Bluetooth-Modul (274) der Steuereinheit (27) drahtlos mit den Bluetooth-Modulen (215), (284) der Kommunikationseinheit (21) und der zweiten Kommunikationseinheit (28) verbunden ist; und wobei das Tastenmodul (276) verwendet wird, um die Kommunikationseinheit (21) und die zweite Kommunikationseinheit (28) zu steuern.

15. Kommunikationsvorrichtung zur Befestigung an einem Helm nach Anspruch 14, wobei die Steuereinheit (27) ferner eine Anzeige (272) aufweist, die außen an dem Bedienfeld (270) angeordnet ist, und ein Anzeigemodul (276), das innen in dem Bedienfeld (270) angeordnet ist, um an den Mikroprozessor (273) der Steuereinheit (27) elektrisch angeschlossen zu sein; und wobei die Anzeige (272) einen Nutzungszustand der Kommunikationseinheit (21) und der zweiten Kommunikationseinheit (28) anzeigt.

## Revendications

1. Dispositif de communication (20) attachable à un casque, destiné à être monté de manière détachable sur un côté externe d'un casque (11) et à se connecter de manière sans fil à un dispositif de communication mobile (10) pour permettre à un utilisateur de parler avec d'autres tout en conduisant une moto sans nécessiter de tenir le dispositif de communication mobile (10), comprenant :
une unité de communication (21) ayant un boîtier (210) dotée extérieurement d'une pluralité de touches (213) et d'un logement d'extension (26), et dotée intérieurement d'un microprocesseur (214), auquel un module Bluetooth (215), un module de codage/décodage du son (216), un module de touches (217), un module de transmission (218) et un module d'alimentation électrique (219) sont intérieurement connectés électriquement ; le module Bluetooth (215) étant connecté de manière sans fil au dispositif de communication mobile (10), le module de transmission (218) étant connecté électriquement au logement d'extension (26) et le module de touches (217) étant couplé aux touches (213) disposées extérieurement sur le boîtier (210) ;
une unité de fixation (22) disposée extérieurement sur l'unité de communication (21) pour un montage détachable de l'unité de communication (21) sur un côté latéral externe du casque (11) ;
une unité microphone/haut-parleur (23) connectée extérieurement au module de codage/décodage du son (216) dans l'unité de communication (21) et comprenant un microphone (213) et un haut-parleur (232) montés dans le casque (11) ; le microphone (231) recevant la voix de l'utilisateur et le haut-parleur (232) délivrant en sortie des messages vocaux provenant du dispositif de communication mobile (10) ; et
une unité d'extension (24) introduite dans le logement d'extension (26) du boîtier (210) de l'unité de communication (21) pour se connecter électriquement au microprocesseur (214) par l'intermédiaire du module de transmission (218).

2. Dispositif de communication attachable à un casque, selon la revendication 1, dans lequel le boîtier (210) comprend un premier boîtier (211) et un second boîtier correspondant (212), et un mécanisme de liaison (25) disposé entre le premier (211) et le second (212) boîtier ; et le logement d'extension (26) étant disposé sur une face interne du second boîtier (212) tournée vers le premier boîtier (211).

3. Dispositif de communication attachable à un casque, selon la revendication 2, dans lequel le mécanisme de liaison (25) comprend une section pivot (251) disposée à une extrémité du premier boîtier (211), et une section pivot correspondante (252) disposée à une extrémité correspondante du second boîtier (212) pour s'adapter de manière pivotante dans la section pivot (251), de telle sorte que le premier boîtier (211) est apte à être tourné de manière pivotante verticalement autour du mécanisme de liaison (25) par rapport au second boîtier (212) entre une position fermée et une position ouverte.

4. Dispositif de communication attachable à un casque, selon la revendication 2, dans lequel le mécanisme de liaison (25) comprend deux rainures de coulissement allongées espacées (253) prévues sur la face interne du second boîtier (212) à proximité et le long de deux bords latéraux de celui-ci, et deux blocs coulissants disposés de manière correspondante sur une face interne du premier boîtier (211) à proximité et le long de deux bords latéraux de celui-ci ; les blocs coulissants étant maintenus séparément de manière coulissante dans les rainures de coulissement (253), autorisant le premier boîtier (211) à se déplacer en translation par rapport au second boîtier (212) entre une position fermée et une position ouverte, et le premier boîtier (211) à la position ouverte étant horizontalement disjoint du second boîtier (212).

5. Dispositif de communication attachable à un casque, selon la revendication 2, dans lequel le logement d'extension (26) comprend un renfoncement (261) configuré en correspondance avec l'unité d'extension (24), un élément pivotant (262) disposé dans le renfoncement (261) pour maintenir l'unité d'extension (24) dans celui-ci, et un arbre de pivot (263) positionné et relié à une extrémité du renfoncement (261) et de l'élément pivotant (262) ; et dans lequel l'unité d'extension (24) a extérieurement une extrémité configurée en tant que connecteur (241) correspondant au logement d'extension (26) et un dispositif d'affichage (242) situé sur une face supérieure de celui-ci, et a intérieurement un module d'extension (243) connecté électriquement au connecteur (241) et au dispositif d'affichage (242).

6. Dispositif de communication attachable à un casque, selon la revendication 5, dans lequel le module d'extension (243) est un module multifonctionnel combinant plus de l'un d'un module de navigation GPS (244), d'un module de lecteur de musique numérique (245), d'un module de diffusion FM (246) et d'un module de diffusion AM.

7. Dispositif de communication attachable à un casque, selon la revendication 1, dans lequel le logement d'extension (26) définit un espace de réception (264) dans celui-ci, et l'espace de réception (264) étant doté intérieurement d'une prise (265) ; et dans lequel l'unité d'extension (24) comprend un couvercle supérieur (247) configuré en correspondance avec la dimension du logement d'extension (26), un dispositif d'affichage (242) disposé sur une partie supérieure du couvercle supérieur (247), un module d'extension (243) situé sous le couvercle supérieur (247), et une fiche (248) disposée sur le module d'extension (243) destinée à se connecter à la prise (265) dans le logement d'extension (26).

8. Dispositif de communication attachable à un casque, selon la revendication 7, dans lequel le module d'extension (243) est un module multifonctionnel combinant plus de l'un d'un module de navigation GPS (244), d'un module de lecteur de musique numérique (245), d'un module de diffusion FM (246) et d'un module de diffusion AM.

9. Dispositif de communication attachable à un casque, selon la revendication 1, dans lequel l'unité de communication (21) est en outre dotée intérieurement d'un module de communication radio (220) connecté électriquement au microprocesseur (214) pour recevoir et émettre sur une faible portée des signaux radio ayant une fréquence prédéterminée pour permettre ainsi une communication vocale entre différents dispositifs de communication (20).

10. Dispositif de communication attachable à un casque, selon la revendication 1, comprenant en outre une unité de commande (27) connectée de manière sans fil à l'unité de communication (21) ; l'unité de commande (27) comprenant un panneau de commande (270) ayant une pluralité de touches (271) disposées sur celui-ci, le panneau de commande (270) étant doté intérieurement d'un microprocesseur (273), auquel un module Bluetooth (274), un module d'alimentation électrique (275) et un module de touches (277) sont intérieurement connectés électriquement ; et le module Bluetooth (274) de l'unité de commande (27) étant connecté de manière sans fil au module Bluetooth (215) de l'unité de communication (21).

11. Dispositif de communication attachable à un casque, selon la revendication 10, dans lequel l'unité de commande (27) comprend en outre un dispositif d'affichage (272) disposé extérieurement sur le panneau de commande (270) et un module d'affichage (276) disposé intérieurement dans le panneau de commande (270) pour se connecter électriquement au microprocesseur (273) de l'unité de commande (27) ; et le dispositif d'affichage (272) présentant un état d'utilisation de l'unité de communication (21).

12. Dispositif de communication attachable à un casque, selon la revendication 11, dans lequel l'unité de commande (27) est formée d'un seul tenant avec une poignée de moto (12) avec le panneau de commande (270) exposé à partir de la poignée (12).

13. Dispositif de communication attachable à un casque, selon la revendication 1, comprenant en outre une unité de communication secondaire (28) connectée de manière sans fil à l'unité de communication (21) ; l'unité de communication secondaire (28) étant dotée intérieurement d'un microphone (281), d'un haut-parleur (282), d'un microprocesseur (283), d'un module Bluetooth (284), d'un module d'alimentation électrique (285) et d'un module de codage/décodage du son (286) ; le module Bluetooth (284), le module d'alimentation électrique (285) et le module de codage/décodage du son (286) étant connectés électriquement au microprocesseur (283) et le microphone (281) et le haut-parleur (282) étant connectés électriquement au module de codage/décodage du son (286).

14. Dispositif de communication attachable à un casque, selon la revendication 13, comprenant en outre une unité de commande (27) connectée de manière sans fil à l'unité de communication (21) et à l'unité de communication secondaire (28) ; l'unité de commande (27) comprenant un panneau de commande (270) ayant une pluralité de touches (271) disposées sur celui-ci, le panneau de commande (270) étant doté intérieurement d'un microprocesseur (273) auquel un module Bluetooth (274), un module d'alimentation électrique (275) et un module de touches (276) sont intérieurement connectés électriquement ; le module Bluetooth (274) de l'unité de commande (27) étant connecté de manière sans fil aux modules Bluetooth (215), (284) de l'unité de communication (21) et de l'unité de communication secondaire (28) ; et le module de touches (276) étant utilisé pour commander l'unité de communication (21) et l'unité de communication secondaire (28).

15. Dispositif de communication attachable à un casque, selon la revendication 14, dans lequel l'unité de commande (27) comprend en outre un dispositif d'affichage (272) disposé extérieurement sur le panneau de commande (270) et un module d'affichage (276) disposé intérieurement dans le panneau de commande (270) pour se connecter électriquement au microprocesseur (273) de l'unité de commande (27) ; et le dispositif d'affichage (272) présentant un état d'utilisation de l'unité de communication (21) et de l'unité de communication secondaire (28).
